# EUROPEAN PATENT APPLICATION

(11) **EP 4 379 928 A1**
(43) Date of publication of application: **05.06.2024**
(21) Application number: 22927869.2
(22) Date of filing: 28.02.2022
(51) Int. Cl.: H01M 50/242, H01M 50/209, H01M 50/244, H01M 50/342

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: LEI, Yuyong, Ningde, Fujian 352100 (CN); GUO, Zhijun, Ningde, Fujian 352100 (CN); LI, Chuan, Ningde, Fujian 352100 (CN); SONG, Yingjun, Ningde, Fujian 352100 (CN)
(74) Representative: Gong, Jinping
(86) International application number: PCT/CN2022/078375
(87) International publication number: WO 2023/159588

(57) **Abstract**

The present disclosure relates to a battery cell, a battery and an electric-powered device, and the battery cell includes: an electrode assembly; a shell adapted for receiving the electrode assembly; and a cap assembly adapted for closing an opening of the shell, wherein the shell includes a first wall and two second walls opposite each other, the first wall is adapted to connect the two second walls, the first wall has a wall thickness greater than that of the second wall, the first wall is provided with a pressure relief mechanism, and the pressure relief mechanism is adapted to be activated so as to release the pressure when a gas pressure inside the shell reaches a threshold. The battery cell of the present application can satisfy the requirements on the release of gas inside the battery cell, and meanwhile can ensure the safety performance of the battery cell.

## Description

### TECHNICAL FIELD

The present application relates to the technical field of energy storage equipment, and particularly to a battery cell, a battery and an electric-powered device.

### BACKGROUND

Batteries are widely used in electronic devices, such as mobile phones, laptops, battery cars, electric cars, electric planes, electric boats, electric toy cars, electric toy boats, electric toy planes and electric tools.

In the development of battery technology, besides improving performance of battery cells, safety is also an issue that needs to be considered. Therefore, how to improve the safety of the battery cells is an urgent problem to be solved in the battery technology.

### SUMMARY

The embodiments of the present disclosure provide a battery cell, a battery and an electric-powered device, which can meet requirements on release of gas inside the battery cell and meanwhile can ensure safety performance of the battery cell.

On one aspect, the embodiments of the present disclosure provide a battery cell, including: an electrode assembly; a shell adapted for receiving the electrode assembly; and a cap assembly adapted for closing an opening of the shell, wherein the shell includes a first wall and two second walls opposite each other, the first wall is adapted to connect the two second walls, the first wall has a wall thickness greater than that of the second wall, the first wall is provided with a pressure relief mechanism, and the pressure relief mechanism is adapted to be activated so as to release the pressure when a gas pressure inside the shell reaches a threshold.

According to one aspect of the embodiments of the present application, the wall thickness of the first wall is D1, the wall thickness of the second wall is D2, and D1 and D2 meet the following requirements: 0.05 mm ≤ D1-D2 ≤ 3 mm.

According to one aspect of the embodiments of the present application, the wall thickness of the first wall is greater than or equal to 0.5 mm.

According to one aspect of the embodiments of the present application, in a width direction of the first wall, a minimum distance d between an edge of the first wall and the pressure relief mechanism is greater than 2 mm.

According to one aspect of the embodiments of the present application, the pressure relief mechanism has a length L and a width D, and L and D meet the following requirements: LID ≤ 8.

According to one aspect of the embodiments of the present application, a size of the pressure relief mechanism in a length direction of the first wall is the length L, a size of the pressure relief mechanism in the width direction of the first wall is D, and L and D meet the requirements of L>D.

According to one aspect of the embodiments of the present application, the first wall has an area smaller than that of the second wall.

According to one aspect of the embodiments of the present application, two ends of the shell are both formed with openings, and each opening is closed with the cap assembly; and the shell further includes a third wall adapted for connecting the two second walls, the third wall is disposed opposite to the first wall, the wall thickness of the first wall is greater than or equal to that of the third wall, and the wall thickness of the third wall is greater than that of the second wall.

According to one aspect of the embodiments of the present application, the first wall includes a through hole extending in a thickness direction of the first wall, the pressure relief mechanism is disposed inside the through hole, and in the thickness direction, at least one of a surface of the first wall facing the electrode assembly and a surface of the first wall facing away from the electrode assembly is spaced apart from the pressure relief mechanism.

According to one aspect of the embodiments of the present application, the through hole is formed as a stepped hole and includes a first hole segment, a second hole segment, and a first step surface connected between the first hole segment and the second hole segment, the first hole segment has an aperture size smaller than that of the second hole segment, the second hole segment is located on a side of the first hole segment facing away from the electrode assembly, the pressure relief mechanism is disposed in the second hole segment, and the first step surface is adapted to support the pressure relief mechanism.

According to one aspect of the embodiments of the present application, the through hole further includes a third hole segment and a second step surface, the third hole segment is located on a side of the second hole segment facing away from the first hole segment, and the second step surface is connected to the second hole segment and the third hole segment.

According to one aspect of the embodiments of the present application, the battery cell further includes a protective film, the protective film is disposed on a side of the pressure relief mechanism facing away from the electrode assembly and is spaced apart from the pressure relief mechanism, and a chamber is formed among the protective film, a hole wall of the through hole, and the pressure relief mechanism.

According to one aspect of the embodiments of the present application, the protective film is adhered to the surface of the first wall facing away from the electrode assembly, and the surface of the first wall facing away from the electrode assembly is provided with a communicating mechanism, one end of which is communicated with the chamber, and the other end is communicated with an external space.

According to one aspect of the embodiments of the present application, the through hole further includes a fourth hole segment and a third step surface, wherein the fourth hole segment is located on a side of the third hole segment facing away from the second hole segment, and the third step surface is connected to the third hole segment and the fourth hole segment; and the third step surface is provided with a communicating mechanism, one end of which is communicated with the chamber, and the other end is communicated with an external space.

On a further aspect, the embodiments of the present application provide a battery, including: the battery cell as described above; and a cooling component that covers at least part of the shell and is adapted to cool the battery cell.

According to a further aspect of the embodiments of the present application, in a thickness direction of the first wall, the cooling component is at least partially spaced apart from and opposite to the first wall, and the cap assembly is located between the cooling component and the first wall.

According to a further aspect of the embodiments of the present application, the cooling component includes a first cooling plate and a second cooling plate spaced apart in the thickness direction, the first cooling plate is provided with an avoiding hole and is adapted to cover the first wall where the pressure relief mechanism is located and the avoiding hole is adapted to avoid the pressure relief mechanism, while the second cooling plate is adapted to cover a side of the shell facing away from the pressure relief mechanism.

On another aspect, the embodiments of the present application provide an electric-powered device including the battery as described above, wherein the battery is adapted to provide electrical energy.

In the battery cell, the battery and the electric-powered device provided by the embodiments of the present application, the battery cell includes the electrode assembly, the shell and the cap assembly, the shell accommodates the electrode assembly, and the cap assembly closes the opening of the shell. The shell includes a first wall and two second walls opposite each other, the first wall is adapted to connect the two second walls, and the first wall is provided with a pressure relief mechanism such that the pressure relief mechanism is activated to release the pressure when the gas pressure inside the shell reaches a threshold, thereby ensuring the safety performance of the battery cell. Moreover, by making the wall thickness of the first wall greater than that of the second wall, the wall thickness of the first wall can be increased, thereby strengthening the support of the first wall for an explosion-proof valve, improving the service life of the explosion-proof valve, and further ensuring the safety performance of the battery cell.

The above description is only an overview of the technical solutions of the present application, and in order to understand the technical means of the present application more clearly and thus be able to implement the present application according to the contents of the specification, and meanwhile in order to make the above and other purposes, features, and advantages of the present application more obvious and understandable, the specific implementations of the present application are listed below.

### BRIEF DESCRIPTION OF THE DRAWINGS

The features, advantages, and technical effects of exemplary embodiments of the present application will be described below with reference to the accompanying drawings.
Fig. 1 is a structural schematic diagram of a vehicle provided in some embodiments of the present application;
Fig. 2 is an exploded view of a battery provided in some embodiments of the present application;
Fig. 3 is an explosive structural schematic diagram of a battery cell provided in some embodiments of the present application;
Fig. 4 is a structural schematic diagram of a shell in an embodiment of the present application;
Fig. 5 is a bottom view of a battery in an embodiment of the present application;
Fig. 6 is an exploded view of a shell in an embodiment of the present application;
Fig. 7 is a partial cross-sectional view of a shell according to an embodiment of the present application;
Fig. 8 is a schematic diagram of cooperation of a shell, a pressure relief mechanism, and a protective film in an embodiment of the present application;
Fig. 9 is a partial enlarged view at position A in Fig. 8;
Fig. 10 is an exploded view of a battery in another embodiment of the present application.

1000-vehicle;
100-battery; 200-controller; 300-motor;
10-casing; 11-first part; 12-second part; 13-accommodating space;
20-battery cell;
21-cap assembly; 21a-electrode terminal; 21b-cap plate;
22-shell; 22a-opening; 221-first wall; 222-second wall; 223-third wall; 224 through hole; 2241-first hole segment; 2242-second hole segment; 2243-first step surface; 2244-third hole segment; 2245-second step surface; 2246-fourth hole segment; 2247-third step surface;
23-electrode assembly;
24- pressure relief mechanism;
25-protective film;
26-communicating mechanism;
27-chamber;
30-cooling component; 31-first cooling plate; 32-second cooling plate; 321-avoiding hole.

In the accompanying drawings, the same reference numerals are used for the same components. The accompanying drawings are not drawn to the actual scale.

### DETAILED DESCRIPTION

In order to make the purpose, technical solutions and advantages of the embodiments of the present application clearer, the technical solutions in the embodiments of the present application will be clearly described below in combination with the accompanying drawings in the embodiments of the present application. Obviously, the described embodiments are a part of the embodiments of the present application, not all of them. Based on the embodiments in the present application, all other embodiments obtained by ordinary skilled person in the art without creative labor fall within the protection scope of the present application.

Unless otherwise defined, all technical and scientific terms used in the present application have the same meanings as those commonly understood by the person skilled in the art of the present application; the terms used in the specification of the present application are only intended to describe specific embodiments while not limit the present application; the terms "comprise" and "have" in the description, claims and the above description of accompanying drawings of the present application, and any variations thereof, are intended to cover non-exclusive inclusion. The terms "first", "second", etc. in the description, claims and the above description of accompanying drawings of the present application are used to distinguish different objects, rather than to describe specific sequences or primary and secondary relationships.

When referring to "embodiment" in the present application, it means that specific features, structures, or characteristics described in combination with said embodiment can be included in at least one embodiment of the present application. The phrase appearing in various positions in the description does not necessarily refer to the same embodiment, nor is it an independent or alternative embodiment that is mutually exclusive with other embodiments.

In the description of the present application, it should be noted that unless otherwise specified and limited, the terms "installation", "connection", "coupling", and "attachment" should be broadly understood, for example, they can be fixed connections, detachable connections, or integrated connections; they can be direct connections, or indirect connections through intermediate mediums, or can be internal connections between two components. For ordinary skilled person in the art, the specific meanings of the above terms in the present application can be understood according to specific circumstances.

In the present application, the term "and/or" is only a description of the association relationship of associated objects, indicating that there can be three types of relationships, for example, C and/or D can indicate the presence of C alone, the presence of C and D simultaneously, and the presence of D alone. In addition, the character "/" in the present application generally indicates that the associated objects before and after the character are in an "or" relationship.

In the embodiments of the present application, the same reference numerals represent the same components, and for simplicity, detailed descriptions of the same components are omitted in different embodiments. It should be understood that the thickness, length, width, and other dimensions of various components as well as the overall thickness, length, width, and other dimensions of the integrated device in the embodiments of the present application shown in the accompanying drawings, are only illustrative examples and should not constitute any limitations in the present application.

The term "multiple" in the present application refers to two or more (including two).

In the present application, a battery cell may include a lithium ion secondary battery cell, a lithium ion primary battery cell, a lithium sulfur battery cell, a sodium-lithium ion battery cell, a sodium ion battery cell, a magnesium ion battery cell, or the like, and the embodiments of the present application do not limit this. The battery cell can be in a shape of a cylinder, a flat body, a rectangular cuboid or in other shapes, and the embodiments of the present application do not limit this.

The battery mentioned in the embodiments of the present application refers to a single physical module that includes one or more battery cells to provide higher voltage and capacity. For example, the battery mentioned in the present application may include battery modules, battery packs, or the like. The battery generally includes a casing for packaging one or more battery cells. The casing can prevent liquids or other foreign substances from affecting charging or discharging of the battery cells.

The battery cell includes an electrode assembly and a shell for receiving the electrode assembly, and the electrode assembly is composed of a positive electrode plate, a negative electrode plate, and a separator. The battery cell operates mainly relying on movement of metal ions between the positive and negative electrode plates. The positive electrode plate includes a positive current collector and a positive active substance layer, the positive active substance layer is coated on a surface of the positive current collector, and the positive current collector without the positive active substance layer protrudes from the positive current collector with the coated positive active substance layer, and serves as a positive tab. Taking the lithium ion battery cell as an example, the positive current collector can be made of aluminum, and the positive active substance can be lithium cobalt oxide, lithium iron phosphate, ternary lithium or lithium manganese oxide. The negative electrode plate includes a negative current collector and a negative active substance layer, the negative active substance layer is coated on a surface of the negative current collector, and the negative current collector without the negative active substance layer protrudes from the negative current collector with the coated negative active substance layer, and serves as a negative tab. The negative current collector can be made of copper, and the negative active substance can be carbon or silicon. In order to ensure flowing of high current without melting, the positive tabs are multiple and stacked together, while the negative tabs are multiple and stacked together. The separator can be made of PP (polypropylene) or PE (polyethylene), or the like. Further, the electrode assembly can be a wound structure or a stacking structure, and the embodiments of the present application are not limited to this.

The development of battery technology needs to consider multiple design factors simultaneously, such as energy density, cycle life, discharge capacity, charge and discharge rate, and other performance parameters. Further, the safety of the battery also needs to be considered.

In the battery cell, multiple charging and discharging cycles occur, and side reactions and continuous gas generation exist, resulting in a certain gas pressure inside the battery cell. As the gas pressure increases, the gas between the electrode plates cannot be discharged timely, and affects insertion and removal of the lithium ions, leading to the risk of lithium evolution. To ensure the safety of the battery cell, a pressure relief mechanism is generally provided on the shell of the battery cell, through which the gas generated inside the battery cell is discharged, so as to ensure the safety of the battery cell.

The inventors found that during usage of the battery cell, the wall of the shell corresponding to the pressure relief mechanism does not have sufficient support capability for the pressure relief mechanism, which affects the service life of the pressure relief mechanism and thus poses hidden dangers to the safety performance of the battery cell.

The inventors further found through extensive research that the shell of existing battery cell is generally designed with equal wall thickness on each side, and in order to ensure the usable space of the battery cell and improve the energy density thereof, the side walls are generally designed to be thin. As a result, the connection area between the pressure relief mechanism and the side wall in the corresponding area of the shell is small, which is not conducive to the connection between the pressure relief mechanism and the side wall of the shell, and the side wall provides a weak support to the pressure relief mechanism, which in turn affects the service life of the pressure relief mechanism.

In view of this, the embodiments of the present application provide a battery cell, including a shell, an electrode assembly and a cap assembly, the shell is adapted to receive the electrode assembly, and the cap assembly is adapted to close an opening of the shell, where the shell includes a first wall and two second walls opposite each other, the first wall is adapted to connect the two second walls, the first wall has a wall thickness greater than that of the second wall, the first wall is provided with a pressure relief mechanism, the pressure relief mechanism is adapted to be activated so as to release the pressure when a gas pressure inside the shell reaches a threshold.

Compared to the existing battery cell, the wall thickness of the first wall where the pressure relief mechanism is located has been increased, which can strengthen the support of the first wall for an explosion-proof valve, improve the service life of the explosion-proof valve, and further ensure the safety performance of the battery.

The battery cell described in the embodiments of the present application is applicable to batteries, and electric-powered devices and equipment using the batteries.

The electric-powered devices and equipment can be vehicles, mobile phones, portable devices, laptops, ships, spacecraft, electric toys, electric tools, and the like. The vehicle can be a fuel powered vehicle, a gas powered vehicle, or a new energy vehicle, the new energy vehicle can be a pure electric vehicle, a hybrid electric vehicle, an extended range vehicle, and the like; the spacecraft include airplanes, rockets, space shuttles, spaceships, and the like; the electric toys include fixed or mobile electric toys, such as game machines, electric car toys, electric ship toys, electric aircraft toys, and the like; the electric tools include metal cutting electric tools, grinding electric tools, assembly electric tools and railway electric tools, such as electric drills, electric grinders, electric wrenches, electric screwdrivers, electric hammers, electric impact drills, concrete vibrators and electric planers. The embodiments of the present application do not have any limitations on the above-mentioned electric-powered equipment.

For the convenience of description, the following embodiments are described by taking a vehicle as an example of the electric-powered device.

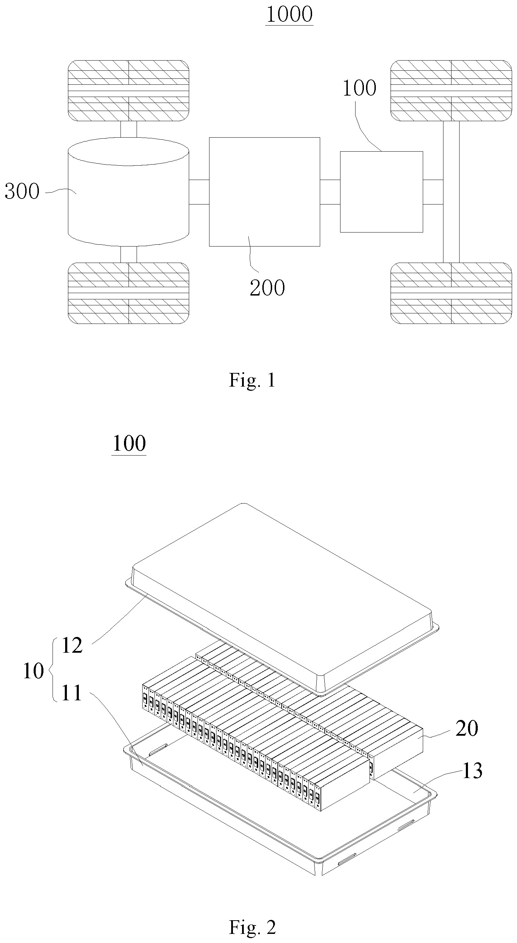

Referring to Fig. 1, Fig. 1 is a structural schematic diagram of a vehicle 1000 provided in some embodiments of the present application. The vehicle 1000 can be a fuel powered vehicle, a gas powered vehicle, or a new energy vehicle, and the new energy vehicle can be a pure electric vehicle, a hybrid electric vehicle, an extended range vehicle or the like. The vehicle 1000 is provided with a battery 100 in its interior, and the battery 100 can be disposed at a bottom, head, or tail of the vehicle 1000. The battery 100 can be adapted for supplying electrical power to the vehicle 1000, for example, the battery 100 can serve as an operating power source of the vehicle 1000. The vehicle 1000 can further include a controller 200 and a motor 300, and the controller 200 is adapted for controlling the battery 100 to supply electrical power to the motor 300, for example, to satisfy the working electrical power requirements of the vehicle 1000 on starting, navigation, and travelling.

In some embodiments of the present application, the battery 100 can not only serve as the operating power source of the vehicle 1000, but also as a driving power source of the vehicle 1000, replacing or partially replacing fuel or natural gas to provide driving power for the vehicle 1000.

Referring to Fig. 2, Fig. 2 is an exploded view of the battery 100 provided in some embodiments of the present application. The battery 100 includes a casing 10 and battery cells 20, and the battery cells 20 are accommodated within the casing 10. The casing 10 is adapted to provide accommodating space for the battery cells 20, and may be formed into various structures. In some embodiments, the casing 10 may include a first part 11 and a second part 12, the first part 11 and the second part 12 cover and close each other, and the first part 11 and the second part 12 define an accommodating space 13 for accommodating the battery cells 20 together. The second part 12 can be a hollow structure with an opening at one end, the first part 11 can be a plate-like structure, and the first part 11 covers and closes the opening side of the second part 12 to define the accommodating space 13 together with the second part 12. The first part 11 and the second part 12 both can be hollow structures with openings on one side, and the opening side of the first part 11 is covered and closed by the opening side of the second part 12. Certainly, the casing 10 formed by the first part 11 and the second part 12 can be of various shapes, such as a cylinder, a rectangular cuboid, and the like.

In the battery 100, there may be multiple battery cells 20, and the multiple battery cells 20 can be connected in series, in parallel, or in hybrid, and "in hybrid" means there are both connections in series and in parallel among the multiple battery cells 20. The multiple battery cells 20 can be directly connected together in series, in parallel, or in hybrid, and then an integrity composed of the multiple battery cells 20 can be accommodated in the casing 10. Certainly, in the battery 100, it is also available that the multiple battery cells 20 are connected in series, in parallel, or in hybrid at first to form battery modules, and then multiple battery modules are connected in series, in parallel, or in hybrid to form an integrity, which is accommodated in the casing 10. The battery 100 may further include other structures, for example, the battery 100 may further include a busbar for achieving electrical connections among the multiple battery cells 20.

Each battery cell 20 can be a secondary battery or a primary battery, and further can be lithium sulfur battery, sodium ion battery or magnesium ion battery, but is not limited to this. The battery cell 20 may be formed in a shape of a flat body, a rectangular cuboid or in other shapes.

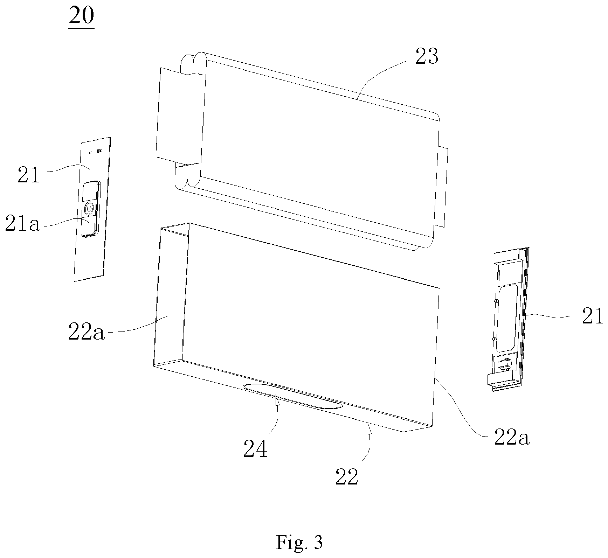

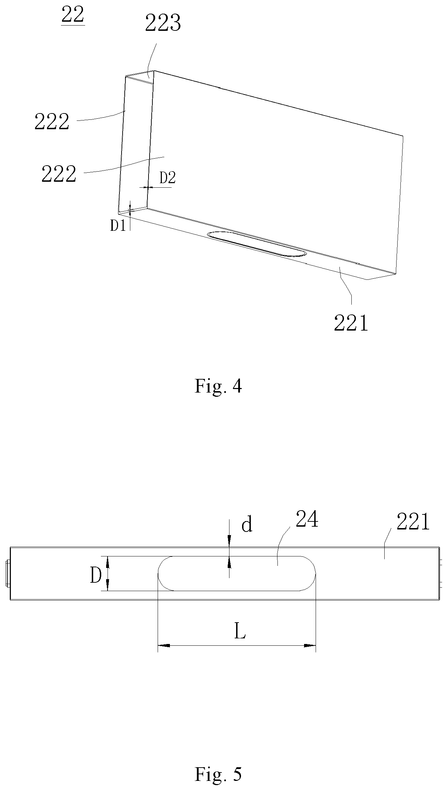

Referring to Figs. 3 and 4, the battery cell 20 refers to the smallest unit that constitutes the battery. The battery cell 20 includes a shell 22, an electrode assembly 23, and a cap assembly 21, the shell 22 is adapted to receive the electrode assembly 23, and the cap assembly 21 is adapted to close an opening 22a of the shell 22; the shell 22 includes a first wall 221 and two second walls 222 opposite each other, the first wall 221 is adapted to connect the two second walls 222, the first wall 221 has a wall thickness greater than that of the second wall 222, and the first wall 221 is provided with a pressure relief mechanism 24, which is adapted to be activated to release the pressure when a gas pressure inside the shell 22 reaches a threshold.

Optionally, the shell 22 includes a receiving space, and the first wall 221 and second walls 222 included in the shell 22 can intersect and optionally can be arranged perpendicularly to each other. A distance between the two second walls 222 can be set according to the size of the electrode assembly 23, which is located among the first wall 221 and the second walls 222.

The wall thickness of the first wall 221 can be understood as the thickness at various positions of the first wall 221 in a direction perpendicular to a surface of the first wall 221 facing the interior receiving space of the shell 22.

The wall thickness of the second wall 222 can be understood as the thickness at various positions of the second wall 222 in a direction perpendicular to a surface of the second wall 222 facing the interior receiving space of the shell 22.

The two second walls 222 may have the same thickness, while it is also available that one of them is thicker than the other.

The shell 22 may include one opening 22a, and it is also available that the shell 22 includes two openings 22a; when there are two openings 22a, the two openings 22a can be spaced apart and opposite each other.

Optionally, the cap assembly 21 refers to a component that covers the opening 22a of the shell 22 to isolate an internal environment of the battery cell 20 from an external environment. Without any limitation, the cap assembly 21 can be formed into a shape fitting with that of the shell 22 so as to match with the shell 22.

Optionally, the cap assembly 21 can be made of a material with a certain hardness and strength (such as aluminum alloy), so that the cap assembly 21 is less prone to deformation when subjected to compression and collision, enabling the battery cell 20 to have higher structural strength and improved safety performance. The cap assembly 21 can include functional components such as an electrode terminal 21a. The electrode terminal 21a can be electrically connected with the electrode assembly 23 for outputting or inputting electrical energy out of or into the battery cell 20. The cap assembly 21 can be made of various materials, such as copper, iron, aluminum, stainless steel, aluminum alloy, and plastic, and the embodiments of the present application do not have any particular limitations on this aspect.

As shown in Figs. 3 and 4, the shell 22 is a component adapted to match with the cap assembly 21 to form the internal environment of the battery cell 20, where the formed internal environment can be adapted to receive the electrode assembly 23, electrolyte, and other components. The shell 22 and the cap assembly 21 can be independent components; an opening 22a can be provided on the shell 22, and by closing the shell 22 at the opening 22a with the cap assembly 21, the internal environment of the battery cell 20 can be formed.

Without any limitation, the cap assembly 21 and the shell 22 can further be integrally formed; specifically, the cap assembly 21 and the shell 22 can form a common connection surface before loading other components into the shell, and when it needs to close the interior of the shell 22, the cap assembly 21 can then cover the shell 22. The shell 22 may be of various shapes and sizes, such as in a shape of a rectangular cuboid, a hexagonal prism, or the like. Specifically, the shape of the shell 22 can be determined according to the specific shape and size of the electrode assembly 23. The shell 22 can be made of various materials, such as copper, iron, aluminum, stainless steel, aluminum alloy, and plastic, and the embodiments of the present application do not have particular limitations on this aspect.

The electrode assembly 23 is a component that undergoes electrochemical reactions in the battery cell 20. The shell 22 may contain one or more electrode assemblies 23. The electrode assembly 23 is mainly formed by winding or stacking positive and negative electrode plates, and generally includes a separator disposed between the positive and negative electrode plates. The parts of the positive and negative electrode plates with active substances form a main body of the electrode assembly 23, while the parts of the positive and negative electrode plates without active substances respectively form electrode tabs. The positive and negative tabs may be located at the same end of the main body or respectively at two ends of the main body. During the charging and discharging process of the battery cell, the positive and negative active substances react with the electrolyte, and the electrode tabs are connected to the electrode terminals 21a to form a current circuit.

The pressure relief mechanism 24 is disposed on the first wall 221 of the shell 22, for discharging gas out of the shell 22 when the gas pressure inside the shell 22 reaches a threshold, and the pressure relief mechanism 24 can be an explosion-proof valve or other device that can burst or open when the pressure reaches the threshold, so as to discharge the gas out of the shell 22.

The pressure relief mechanism 24 and the first wall 221 of the shell 22 may be formed integrally, and it is certainly available that the two components may be separately processed and connected into an integrity after processing; for example, when the two component are separately formed, they can be connected to each other by welding or other manners.

In the battery cell 20 provided in the embodiments of the present application, the electrode assembly 23 is received by the shell 22, and the opening 22a of the shell 22 is closed by the cap assembly 21. The shell 22 includes the first wall 221 and the two second walls 222 opposite each other, the first wall 221 is adapted to connect the two second walls 222, and the first wall 221 is provided with the pressure relief mechanism 24, which is activated to release pressure when the gas pressure inside the shell 22 reaches a threshold, thereby ensuring the safety performance of the battery cell 20. Moreover, by making the wall thickness of the first wall 221 greater than that of the second walls 222, the wall thickness of the first wall 221 can be increased, which can strengthen the support of the first wall 221 for the explosion-proof valve, increase the connection area between the pressure relief mechanism 24 and the first wall 221, avoid the pressure relief mechanism 24 from being damaged due to its insufficient connection strength with the first wall 221 during the operation thereof, and improve the service life of the pressure relief mechanism 24, further ensuring the safety performance of battery cell 20.

In some optional embodiments, the wall thickness of the first wall 221 is D1, the wall thickness of the second wall 222 is D2, and D1 and D2 meet the following requirements: 0.05 mm ≤ D1-D2 ≤ 3 mm.

The difference between the wall thickness D1 of the first wall 221 and the wall thickness D2 of the second wall 222 can be any value between 0.05 mm and 3 mm, including the two end values: 0.05 mm and 3 mm.

With the above settings, the wall thickness of the first wall 221 and the wall thickness of the second wall 222 can be controlled within appropriate ranges, an excessive wall thickness difference between the first wall 221 and the second wall 222, which may increase processing difficulty of the shell 22, can be avoided, while the connection and support requirements on the first wall 221 for the pressure relief mechanism 24 can be ensured. Moreover, the requirements on the receiving space of the shell 22 can be satisfied and the energy density of the battery cell 20 can be improved.

In some optional embodiments, D1 and D2 can meet the requirements of 0.1 mm ≤ D1-D2 ≤ 0.7 mm. It is conducive to the processing of the shell 22 and ensuring the energy density of the battery cell 20.

In some optional embodiments, the wall thickness of the first wall 221 is greater than or equal to 0.5 mm, and the wall thickness of the first wall 221 can be 0.5 mm, 0.6 mm, 0.7 mm, 0.8 mm, 0.9 mm, 1 mm, and the like.

By adopting the above-mentioned structural form, the first wall 221 can have sufficient thickness, which is conducive to its connection and support to the pressure relief mechanism 24 and improving the service life of the pressure relief mechanism 24.

As shown in Figs. 3 to 5, in some optional embodiments, in a width direction of the first wall 221, a minimum distance *d* between an edge of the first wall 221 and the pressure relief mechanism 24 is greater than 2 mm.

The width direction of the first wall 221 is perpendicular to a thickness direction of the first wall 221, and the edge of the first wall 221 can be understood as the outermost outer contour shape of the first wall 221. When the first wall 221 is formed in a shape of a rectangle, the edge of the first wall 221 is the outermost rectangular contour of the first wall 221.

By making the minimum distance *d* between the edge of the first wall 221 and the pressure relief mechanism 24 to be greater than 2 mm, the connection requirements between the first wall 221 and the pressure relief mechanism 24 can be ensured during the process of integral forming of the pressure relief mechanism 24 and the first wall 221 or connection of them after separately formed, and forming or connecting difficulties that may occur due to the small minimum distance *d* during the integral forming or connection of the two components, can be avoided.

In some optional embodiments, the pressure relief mechanism 24 has a length L and a width D, and L and D meet the following requirements: LID ≤ 8.

A length direction and a width direction of the pressure relief mechanism 24 are perpendicular to the thickness direction of the first wall 221.

With the above configuration, the pressure relief mechanism 24 is not easily deformed during the process of being integrally formed with the first wall 221 or connected with the first wall 221 after being separately formed from the first wall 221. When the internal pressure of battery cell 20 exceeds a preset threshold, the pressure relief mechanism 24 is activated so as to reduce pressure fluctuations and thus improve the safety performance of the battery cell 20.

As an optional implementation, the size of the pressure relief mechanism 24 in the length direction of the first wall 221 is the length L, the size of the pressure relief mechanism 24 in the width direction of the first wall 221 is D, and L and D meet the requirements of L > D.

The length direction of the first wall 221 can be consistent with the length direction of the pressure relief mechanism 24, and the width direction of the first wall 221 can be consistent with the width direction of the pressure relief mechanism 24. By the above configuration, the shape of the pressure relief mechanism 24 is fit with the shape of the first wall 221, which can ensure the connection requirement between the pressure relief mechanism 24 and the first wall 221, and also is conductive to activating the pressure relief mechanism 24 to release the pressure when the gas pressure inside the shell 22 reaches the threshold.

In some optional embodiments, the first wall 221 has an area smaller than that of the second wall 222.

The area of the first wall 221 refers to an area of an outer contour shape of an orthographic projection of the first wall 221 in its own thickness direction; for example, when the orthographic projection of the first wall 221 in its own thickness direction is rectangular, the area is an area of the rectangular outer contour.

The area of the second wall 222 refers to an area of an outer contour shape of an orthographic projection of the second wall 222 in its own thickness direction; for example, when the orthographic projection of the second wall 222 in its own thickness direction is rectangular, the area of the second wall 222 is an area of the rectangular outer contour.

By making the area of the first wall 221 smaller than the area of the second wall 222, the first wall 221 will bear a greater intensity of pressure under the same pressure due to its smaller area than the area of the second wall 222, which is conductive to activating the pressure relief mechanism 24 located on the first wall 221 to release the pressure.

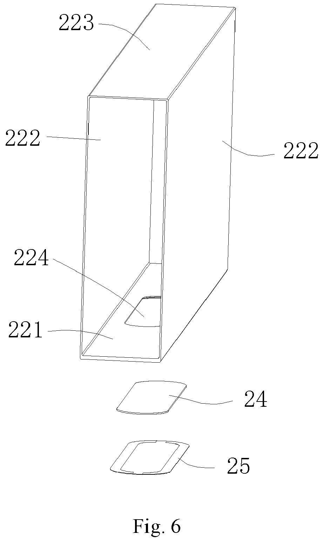

As shown in Figs. 3 to 6, in some optional embodiments, two ends of the shell 22 are both formed with the openings 22a, and each opening 22a is closed by the cap assembly 21. The shell 22 further includes a third wall 223 adapted for connecting the two second walls 222, the third wall 223 is arranged opposite to the first wall 221, the wall thickness of the first wall 221 is greater than or equal to that of the third wall 223, and the wall thickness of the third wall 223 is greater than that of the second wall 222.

Optionally, the openings 22a formed at the two ends of the shell 22 can have the same shape and optionally can be rectangular.

Optionally, the third wall 223 is spaced apart from and symmetrically arranged with the first wall 221, the first wall 221 can be located at the same ends of the two second walls 222, and the third wall 223 can be located at the other ends of the two second walls 222.

Optionally, the wall thickness of the third wall 223 can be understood as the thickness at various positions of the third wall 223 in a direction perpendicular to a surface of the third wall 223 facing the interior receiving space of the shell 22.

Optionally, a thickness direction of the third wall 223 is consistent with the thickness direction of the first wall 221.

By adopting the above structural form, the shell 22 facilitates leading-out of the electrode terminals 21a from two sides thereof. Moreover, the wall thickness of the first wall 221 is greater than or equal to the wall thickness of the third wall 223, and the wall thickness of the third wall 223 is greater than the wall thickness of the second wall 222, that is, the third wall 223 is appropriately thickened, which is beneficial for strengthening the strength of the shell 22 and improving the safety performance of the shell 22. Meanwhile, the asymmetry between the top and bottom of the shell 22 is mitigated, and thus the problem of crack occurrence caused by inconsistent material flow rate during the extrusion process of profiles is solved.

In some optional embodiments, the first wall 221 includes a through hole 224 extending in the thickness direction of the first wall 221, the pressure relief mechanism 24 is disposed inside the through hole 224, and in the thickness direction, at least one of a surface of the first wall 221 facing the electrode assembly 23 and a surface of the first wall 221 facing away from the electrode assembly 23 is spaced apart from the pressure relief mechanism 24.

In the thickness direction of the first wall 221, the first wall 221 may be arranged such that the surface facing the electrode assembly 23 is spaced apart from the pressure relief mechanism 24. It is also possible that the surface of the first wall 221 facing away from the electrode assembly 23 is spaced apart from the pressure relief mechanism 24. Certainly, in some embodiments, the first wall 221 can be arranged such that both of the surface facing the electrode assembly 23 and the surface facing away from the electrode assembly 23 are spaced apart from the pressure relief mechanism 24.

By the above configuration, it is possible to effectively prevent foreign objects inside and/or outside the battery cell 20 from damaging the pressure relief mechanism 24, thereby improving the safety performance of the battery cell 20.

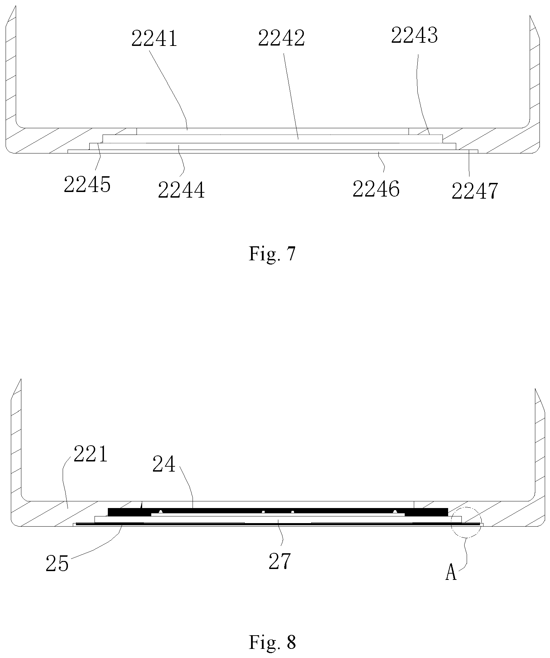

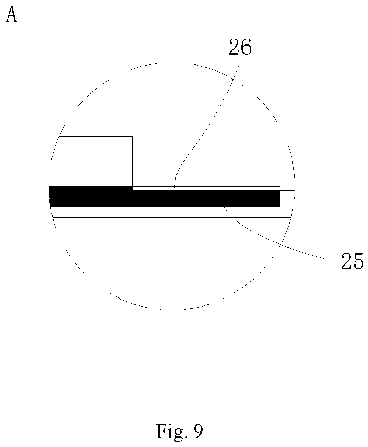

As shown in Figs. 7 to 9, in an optional embodiment, the through hole 224 is formed as a stepped hole, which includes a first hole segment 2241, a second hole segment 2242, and a first step surface 2243 connected between the first hole segment 2241 and the second hole segment 2242; the first hole segment 2241 has an aperture size smaller than that of the second hole segment 2242, the second hole segment 2242 is located on a side of the first hole segment 2241 facing away from the electrode assembly 23, the pressure relief mechanism 24 is disposed in the second hole segment 2242, and the first step surface 2243 is adapted to support the pressure relief mechanism 24.

The first hole segment 2241 and the second hole segment 2242 may have polygonal cross sections, and when the first hole segment 2241 and the second hole segment 2242 are formed in the shape of polygons, the aperture sizes of the first hole segment 2241 and the second hole segment 2242 can be diameters of their respective circumcircles or inscribed circles.

By the above configuration, it is possible to limit the pressure relief mechanism 24 through the first step surface 2243, and meanwhile, it is possible to space the pressure relief mechanism 24 apart from the surface of the first wall 221 facing the electrode assembly 23, thereby avoiding the pressure relief mechanism 24 from being damaged by components such as the electrode assembly 23 inside the battery cell 20.

In some embodiments, the through hole 224 further includes a third hole segment 2244 and a second step surface 2245, the third hole segment 2244 is located on a side of the second hole segment 2242 facing away from the first hole segment 2241, and the second step surface 2245 is connected to the second hole segment 2242 and the third hole segment 2244.

By the above configuration, the surface of the first wall 221 facing away from the electrode assembly 23 is spaced apart from the pressure relief mechanism 24, thereby further avoiding the pressure relief mechanism 24 from being scratched by foreign objects outside the battery cell 20 and thus ensuring the safety performance of the battery cell 20.

Optionally, the third hole segment 2244 has an aperture size greater than that of the second hole segment 2242, so as to facilitate the installation of the pressure relief mechanism 24.

In some optional embodiments, the battery cell 20 further includes a protective film 25, which is disposed on a side of the pressure relief mechanism 24 facing away from the electrode assembly 23, the protective film 25 is spaced apart from the pressure relief mechanism 24, and a chamber 27 is formed among the protective film 25, a hole wall of the through hole 224 and the pressure relief mechanism 24.

The protective film 25 can be made of materials such as PET, and the protective film 25 can be located inside or outside the through hole 224.

By providing the protective film 25, the pressure relief mechanism 24 can be protected, and avoided from scratches and other injuries caused by foreign objects outside the battery cell 20. Meanwhile, the forming of the chamber among the protective film 25, the hole wall of the through hole 224 and the pressure relief mechanism 24 is conducive to the actuation of the pressure relief mechanism 24 when the internal pressure of the battery cell 20 reaches the threshold, thereby avoiding the actuation of the pressure relief mechanism 24 from being affected by the protective film 25.

In some optional embodiments, the protective film 25 is adhered to the surface of the first wall 221 facing away from the electrode assembly 23, and the surface of the first wall 221 facing away from the electrode assembly 23 is provided with a communicating mechanism 26, one end of which is communicated with the chamber, and the other end is communicated with an external space.

The communicating mechanism 26 can be a structure such as a communicating hole, a communicating groove, and a communicating pipe, arranged on at least one of the protective film 25, the first wall 221, and the like.

By providing the communicating mechanism 26, it is possible to communicate the chamber 27 with the external space of the battery cell 20 through the communicating mechanism 26, so that a gas pressure on the side of the pressure relief mechanism 24 facing away from the electrode assembly 23 can be kept consistent with an external air pressure, which allows the pressure relief mechanism 24 to be activated timely to release the pressure when the gas pressure inside the shell 22 reaches a threshold.

In some optional embodiments, the through hole 224 further includes a fourth hole segment 2246 and a third step surface 2247, the fourth hole segment 2246 is located on a side of the third hole segment 2244 facing away from the second hole segment 2242, and the third step surface 2247 is connected to the third hole segment 2244 and the fourth hole segment 2246. The third step surface 2247 is provided with a communicating mechanism 26, one end of which is communicated with the chamber 27, and the other end is communicated with the external space.

The communicating mechanism 26 can be a communicating groove, a communicating hole, or the like arranged on the third step surface 2247.

By providing the fourth hole segment 2246, the protective film 25 can be located in the fourth hole segment 2246 so that the protective film 25 does not protrude out of the surface of the first wall 221 facing away from the electrode assembly 23, and thus the protective film 25 can be prevented from being scratched and falling off during movement of the battery cell 20.

On a further aspect, the embodiments of the present application further provide a battery, which includes the battery cell 20 provided by the various embodiments as mentioned above.

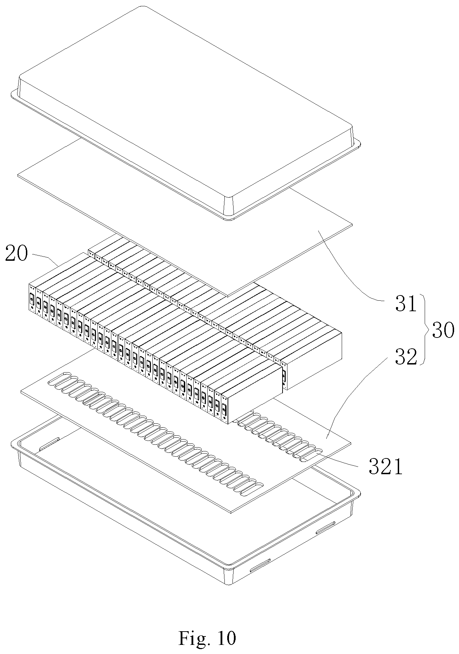

As shown in Fig. 10, optionally, the battery provided by the embodiments of the present application further includes a cooling component 30 for cooling the battery cell 20.

The cooling component 30 can cover at least one of the first wall 221 and the second wall 222 and come into contact with it, and when the battery cell 20 includes the third wall 223, the cooling component 30 can further cover the third wall 223 and come into contact with it.

By providing the cooling component 30, the cooling requirements of the battery cell 20 can be satisfied, and thermal runaway of the battery cell 20 can be avoided.

In some embodiments, in the battery provided in the present application, the cooling component 30 is at least partially spaced apart from and opposite to the first wall 221 in the thickness direction of the first wall 221, and the cap assembly 21 is located between the cooling component 30 and the first wall 221. With such configuration, the cooling component 30, the first wall 221 and the cap assembly 21 are disposed on different planes, interference of the electrode terminals 21a on the cap assembly 21 with the cooling component 30 can be avoided, the contact area between the cooling component 30 and the battery cell 20 can be increased, and the cooling effect of the cooling component 30 on the battery cell 20 can be improved.

As an optional embodiment, in the battery provided by the embodiments of the present application, the cooling component 30 includes a first cooling plate 31 and a second cooling plate 32 spaced apart in the thickness direction of the first wall 221, the first cooling plate 31 is provided with an avoiding hole 321 and is adapted to cover the first wall 221 where the pressure relief mechanism 24 is located, and the avoiding hole 321 is adapted to avoid the pressure relief mechanism 24, while the second cooling plate 32 is adapted to cover a side of the shell 22 facing away from the pressure relief mechanism 24.

The cap assembly 21 is located between the first wall 221 and the second cooling plate 32 of the cooling component 30. By the above configuration, the cooling component 30 can contact and exchange heat with the first wall 221 and the wall opposite the first wall 221, and thus the cooling effect is optimized.

Although the present application has been described with reference to preferred embodiments, various improvements can be made and components can be replaced with equivalents without departing from the scope of the present application. Especially, as long as there is no structural conflict, various technical features mentioned in various embodiments can be combined in any manners. The present application is not limited to the specific embodiments disclosed herein, but includes all technical solutions falling within the scope of the claims.

## Claims

1. A battery cell, **characterized by** comprising:
an electrode assembly;
a shell adapted for receiving the electrode assembly; and
a cap assembly adapted for closing an opening of the shell,
wherein the shell comprises a first wall and two second walls opposite each other, the first wall is adapted to connect the two second walls, the first wall has a wall thickness greater than that of the second wall, the first wall is provided with a pressure relief mechanism, and the pressure relief mechanism is adapted to be activated so as to release the pressure when a gas pressure inside the shell reaches a threshold.

2. The battery cell according to claim 1, **characterized in that** the wall thickness of the first wall is D1, the wall thickness of the second wall is D2, and D1 and D2 meet the following requirements: 0.05 mm ≤ D1-D2 ≤ 3 mm.

3. The battery cell according to claim 1 or 2, **characterized in that** the wall thickness of the first wall is greater than or equal to 0.5 mm.

4. The battery cell according to any of claims 1 to 3, **characterized in that** in a width direction of the first wall, a minimum distance *d* between an edge of the first wall and the pressure relief mechanism is greater than 2 mm.

5. The battery cell according to any of claims 1 to 4, **characterized in that** the pressure relief mechanism has a length L and a width D, and L and D meet the following requirements: LID ≤ 8.

6. The battery cell according to any of claims 1 to 5, **characterized in that** a size of the pressure relief mechanism in a length direction of the first wall is the length L, a size of the pressure relief mechanism in the width direction of the first wall is D, and L and D meet the requirements of L>D.

7. The battery cell according to any of claims 1 to 6, **characterized in that** the first wall has an area smaller than that of the second wall.

8. The battery cell according to any of claims 1 to 7, **characterized in that** two ends of the shell are both formed with openings, and each opening is closed with the cap assembly;
the shell further comprises a third wall adapted for connecting the two second walls, the third wall is disposed opposite to the first wall, the wall thickness of the first wall is greater than or equal to that of the third wall, and the wall thickness of the third wall is greater than that of the second wall.

9. The battery cell according to any of claims 1 to 8, **characterized in that** the first wall comprises a through hole extending in a thickness direction of the first wall, the pressure relief mechanism is disposed inside the through hole, and in the thickness direction, at least one of a surface of the first wall facing the electrode assembly and a surface of the first wall facing away from the electrode assembly is spaced apart from the pressure relief mechanism.

10. The battery cell according to claim 9, **characterized in that** the through hole is formed as a stepped hole and comprises a first hole segment, a second hole segment, and a first step surface connected between the first hole segment and the second hole segment, the first hole segment has an aperture size smaller than that of the second hole segment, the second hole segment is located on a side of the first hole segment facing away from the electrode assembly, the pressure relief mechanism is disposed in the second hole segment, and the first step surface is adapted to support the pressure relief mechanism.

11. The battery cell according to claim 10, **characterized in that** the through hole further comprises a third hole segment and a second step surface, the third hole segment is located on a side of the second hole segment facing away from the first hole segment, and the second step surface is connected to the second hole segment and the third hole segment.

12. The battery cell according to claim 11, **characterized in that** the battery cell further comprises a protective film, the protective film is disposed on a side of the pressure relief mechanism facing away from the electrode assembly and is spaced apart from the pressure relief mechanism, and a chamber is formed among the protective film, a hole wall of the through hole, and the pressure relief mechanism.

13. The battery cell according to claim 12, **characterized in that** the protective film is adhered to the surface of the first wall facing away from the electrode assembly, and the surface of the first wall facing away from the electrode assembly is provided with a communicating mechanism, one end of which is communicated with the chamber, and the other end is communicated with an external space.

14. The battery cell according to claim 12, **characterized in that** the through hole further comprises a fourth hole segment and a third step surface, wherein the fourth hole segment is located on a side of the third hole segment facing away from the second hole segment, and the third step surface is connected to the third hole segment and the fourth hole segment; and
the third step surface is provided with a communicating mechanism, one end of which is communicated with the chamber, and the other end is communicated with an external space.

15. A battery, **characterized by** comprising:
the battery cell according to any of claims 1 to 14;
a cooling component that covers at least part of the shell and is adapted to cool the battery cell.

16. The battery according to claim 15, **characterized in that** in a thickness direction of the first wall, the cooling component is at least partially spaced apart from and opposite to the first wall, and the cap assembly is located between the cooling component and the first wall.

17. The battery according to claim 15, **characterized in that** the cooling component comprises a first cooling plate and a second cooling plate spaced apart in the thickness direction, the first cooling plate is provided with an avoiding hole and is adapted to cover the first wall where the pressure relief mechanism is located and the avoiding hole is adapted to avoid the pressure relief mechanism, while the second cooling plate is adapted to cover a side of the shell facing away from the pressure relief mechanism.

18. An electric-powered device, **characterized by** comprising the battery according to any of claims 15 to 17, wherein the battery is adapted to provide electrical energy.
